# EUROPÄISCHE PATENTSCHRIFT

(11) **EP 1 641 880 B1**
(45) Veröffentlichungstag und Bekanntmachung des Hinweises auf die Patenterteilung: **06.05.2009**
(21) Anmeldenummer: 04739892.0
(22) Anmeldetag: 15.06.2004
(51) Int. Cl.: C08L 69/00, C08L 55/02

(54) **POLYCARBONATFORMMASSEN MIT VERBESSERTER SCHMELZEFLIESSFÄHIGKEIT UND CHEMIKALIENBESTÄNDIGKEIT**
MOLDED POLYCARBONATE MATERIALS HAVING IMPROVED MELT FLOW BEHAVIOR AND RESISTANCE TO CHEMICALS
MATIERE A MOULER A BASE DE POLYCARBONATE A FLUIDITE A CHAUD AMELIOREE ET RESISTANT AUX PRODUITS CHIMIQUES

(30) Priorität: 26.06.2003 DE 10328665
(43) Veröffentlichungstag der Anmeldung: 05.04.2006
(73) Patentinhaber: Bayer MaterialScience AG, 51368 Leverkusen (DE)
(72) Erfinder: SEIDEL, Andreas, 41542 Dormagen (DE); ECKEL, Thomas, 41540 Dormagen (DE); VATHAUER, Marc, 50858 Köln (DE)
(86) Internationale Anmeldenummer: PCT/EP2004/006420
(87) Internationale Veröffentlichungsnummer: WO 2005/000962

(56) Entgegenhaltungen:
- EP-A- 0 488 930
- EP-A- 0 771 852
- WO-A-03/022928

## Beschreibung

Die Erfindung betrifft kautschukmodifizierte Vinylharz enthaltende, insbesondere Acrylnitiril-Butadien-Styrol-Copolymer (ABS) enthaltende Polycarbonat-Zusammensetzungen, die niedermolekulare Vinyl(co)polymerisate mit einem gewichtsgemittelten Molekulargewicht M_{w} von 1500 bis 5000 g/Mol und einer T_{g} (Glasübergangstemperatur) von > 40°C enthalten und sich durch eine verbesserte Schmelzefließfähigkeit bei gleichzeitig verbesserter Chemikalienbeständigkeit auszeichnen.

Polymerblends aus Polycarbonat und Acrylnitiril-Butadien-Styrol-Copolymer (ABS) sind seit langem bekannt. Aufgrund ihres Gesamteigenschaftsprofils aus hoher Wärmeformbeständigkeit, guter (Tieftemperatur-)Zähigkeit und einem gegenüber reinem Polycarbonat verbesserten Verarbeitungsverhalten eignen sich die PC+ABS-Blends besonders z.B. für Automobil-Innen- und Außenanwendungen.

Diese Blends können mit halogenbasierenden, aber insbesondere auch mit halogenfreien Flammschutzmitteln flammwidrig ausgerüstet werden. Flammwidrig ausgerüstete PC+ABS-Blends, insbesondere solche auf Basis von halogenfreien Phosphorsäureestern als Flammschutzmittel, haben sich in Elektro- und Informationstechnologie-Anwendungen in den letzten 15 Jahren etabliert.

EP 0 488 930 A offenbart Zusammensetzungen enthaltend Polycarbonat, kautschukmodifizierte Vinylcopolymerisate und Vinylcopolymerisate und Vinylcopolymerisate mit einem gewichtsgemittelten Molekulargewicht M_{w} von 1500 bis 6000 g/mol.

Für die Verarbeitung, d.h. Formgebung der Formmassen, die für die meisten o.g. Anwendungen im Spritzgussverfahren erfolgt, ist eine gute Schmelzefließfähigkeit von essentieller Bedeutung. Eine verbesserte Schmelzefließfähigkeit erlaubt eine höhere Designfreiheit, die Herstellung größerer Formteile mit weniger Angussstellen (d.h. weniger Bindenähten, die in der Regel eine mechanische Schwachstelle in den Formteilen darstellen) bzw. ein Herabsetzen der Verarbeitungstemperatur, wodurch das Material bei der Formgebung weniger gestresst wird und im Formteil daher in der Regel bessere mechanische Eigenschaften resultieren.

Auf der anderen Seite wird von den Gebrauchsteilen, die aus den Formmassen hergestellt werden, mechanische und thermische Robustheit, d.h. eine hohe Zähigkeit und Wärmeformbeständigkeit, insbesondere aber auch eine gute Beständigkeit gegenüber Chemikalien, Fetten und Ölen und haushaltsgängigen Reinigungsmitteln erwartet.

Eine gleichzeitige Verbesserung von Verarbeitungsverhalten und Chemikalienbeständigkeit unter Beibehaltung der Wärmeformbeständigkeit schließt sich in der Regel aus. So ist es zwar beispielsweise möglich, die Fließfähigkeit von PC+ABS-Blends durch Reduktion des mittleren Molekulargewichts des eingesetzten Polycarbonats zu verbessern, jedoch leidet darunter stark die Chemikalienbeständigkeit des Materials. Durch Einsatz spezieller ABS-Komponenten lässt sich zwar die Chemikalienbeständigkeit erhöhen, doch leidet darunter in der Regel die Fließfähigkeit der Formmasse. In PC+ABS-Blends, die mit Phosphorsäureestern flammwidrig ausgerüstet sind, kann die Fließfähigkeit durch Erhöhung der Flammschutzmittelmenge verbessert werden, jedoch leidet darunter insbesondere die Wärmeformbeständigkeit.

Aufgabe der vorliegenden Erfindung war es somit PC+ABS-Zusammensetzungen bereitzustellen, die sich bei Beibehaltung der Wärmeformbeständigkeit durch verbesserte Schmelzefließfähigkeit und gleichzeitig verbesserte Chemikalienbeständigkeit auszeichnen.

Überraschend wurde nun gefunden, dass sich durch Zusatz von niedermolekularen Vinyl(co)-polymerisaten mit einem gewichtsgemitteltem Molekulargewicht M_{w} von 1500 bis 5000 g/Mol und einer T_{g} von > 40°C zu PC+ABS-Zusammensetzungen, die mit Phosphorsäureestern flammwidrig ausgerüstet sein können, eine gleichzeitige Verbesserung der Schmelzefließfähigkeit und Chemikalienbeständigkeit erzielen lässt, ohne dass dabei die Wärmeformbeständigkeit in nennenswertem Umfang herabgesetzt wird.

Gegenstand der vorliegenden Erfindung sind demnach Zusammensetzungen enthaltend
A) aromatisches Polycarbonat oder Polyestercarbonat oder Mischungen hieraus,
B) kautschukmodifizierte Vinyl(co)polymerisate,
C) Vinyl(co)polymerisate enthaltend einen Anteil α-Methylstyrol von 1,5 bis 17 Gew.-% und/oder einen Anteil Acrylat größer 0 und kleiner 20 Gew.-%, bezogen auf das Copolymer C), mit einem gewichtsgemittelten Molekulargewicht M_{w} von 1500 bis 5000 g/Mol und mit einer T_{g} von > 40°C und gegebenenfalls
D) Phosphorbasierende Flammschutzmittel,
E) Antitropfmittel,
F) Polymeradditive und/oder weitere Polymerkomponenten.

Insbesondere betrifft diese Erfindung Zusammensetzungen enthaltend
A) 20 bis 98 Gew.-Teile, bevorzugt 30 bis 95 Gew.-Teile, insbesondere 40 bis 90 Gew.-Teile aromatisches Polycarbonat und/oder Polyestercarbonat,
B) 1 bis 80 Gew.-Teile, bevorzugt 2 bis 70 Gew.-Tefle, insbesondere 3 bis 50, ganz besonders bevorzugt 3 bis 40 Gew.-Teile kauschukmodifiziertes Vinyl(co)polymerisat,
C) 0,1 bis 20 Gew.-Teile, bevorzugt 0,2 bis 15 Gew.-Teile, insbesondere 0,5 bis 10 Gew.-Teile Vinyl(co)polymerisate enthaltend einen Anteil α-Methylstyrol von 1,5 bis 17 Gew.-% und/oder einen Anteil Acrylat größer 0 und kleiner 20 Gew.-%, bezogen auf das Copolymer C), mit einem gewichtsgemittelten Molekulargewicht M_{w} von 1500 bis 5000 g/Mol und mit einer T_{g} von > 40°C
   und gegebenenfalls
D) 1 bis 30 Gew.-Teile, bevorzugt 2 bis 25 Gew.-Teile, insbesondere 2 bis 20 Gew.-Teile einer Phosphorverbindung als Flammschutzmittel,
E) 0 bis 1 Gew.-Teil, bevorzugt 0,1 bis 0,5 Gew.-Teile, insbesondere 0,2 bis 0,5 Gew.-Teile eines Antitropfmittels, bevorzugt eines fluorierten Polyolefins und
F) bis zu 20 Gew.-Teile, bevorzugt bis zu 15 Gew.-Teile, insbesondere bis zu 10 Gew.-Teile Polymeradditive oder weitere Polymerkomponenten,
wobei die Gew.-Teile aller Komponenten so normiert sind, dass die Summe aller Gew.-Teile 100 ergibt.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate z. B. DE-A 3 077 934).

Die Herstellung aromatischer Polycarbonate erfolgt z. B. durch Schmelzeverfahren oder durch Umsetzung von Diphenolen mit Kohlensäurehalogeniden, vorzugsweise Phosgen, und/oder mit' aromatischen Dicarbonsäuredihalogeniden; vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (I) 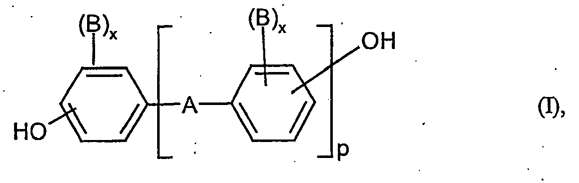 wobei
- A: eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
oder ein Rest der Formel (II) oder (III) 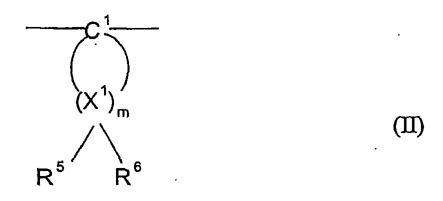 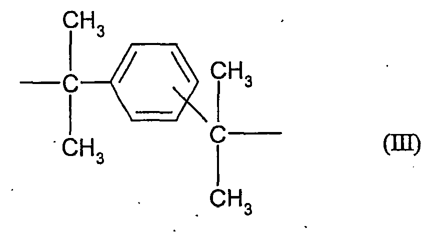
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)propan. Insbesondere bevorzugt ist 2,2-Bis-(4-hydroxyphenyl)propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-A 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfmdungsgemäßer Copolycarbonate gemäß Komponente A können auch 1 bis 25 Gew.-%, vorzugsweise 2,5 bis 25 Gew.-% (bezogen auf die Gesamtmenge an einzusetzenden Diphenolen) Polydiorganosiloxane mit Hydroxyaryloxy-Endgruppen eingesetzt werden. Diese sind bekannt (beispielsweise US 3 419 634) bzw. nach literaturbekannten Verfahren herstellbar. Die Herstellung Polydiorganosiloxanhaltiger Copolycarbonate wird z. B. in DE-A 3 334 782 beschrieben.

Bevorzugte Polycarbonate sind neben den Bisphenol-A-Homopolycarbonaten die Copolycarbonate von Bisphenol-A mit bis zu 15 mol-%, bezogen auf die Molsummen an Diphenolen, anderen als bevorzugt bzw. besonders bevorzugt genannten Diphenolen.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und im Falle von Monocarbonsäurechlorid-Kettenabbrecher auf Mol Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetra-chlorid oder Pyromellithsäuretetrachlorid, in Mengen von 0,01 bis 1,0 Mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxyphenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

### Komponente B

Die Komponente B umfasst Pfropfpolymerisate B1 von mindestens einem Vinylmonomeren auf mindestens einen Kautschuk mit einer Glasübergangstemperatur < 10°C als Pfropfgrundlage.

Bevorzugte Pfropfpolymerisate B1 sind ein oder mehrere Pfropfpolymerisate von
5 bis 95 Gew.-%, vorzugsweise 10 bis 90 Gew.-%, Monomeren einer Mischung aus
1. 50 bis 99 Gew.-%, insbesondere 50 bis 90, noch bevorzugter 55 bis 85, ganz besonders bevorzugt 60 bis 80 Gew.-% Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie Methylmethacrylat, Ethylmethacrylat) und
2. 1 bis 50 Gew.-%, insbesondere 10 bis 50, noch bevorzugter 15 bis 45, ganz besonders bevorzugt 20 bis 40 Gew.-% Vinylcyanide (ungesättigte Nitrile wie Acrylnitril und Methacrylnitril) und/oder (Meth)Acrylsäure-(C₁-C₈)-Alkylester (wie Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid) auf
   95 bis 5, vorzugsweise 80 bis 10 Gew.-% einen oder mehrere Kautschuke mit Glasübergangstemperaturen <10°C, vorzugsweise <0°C, besonders bevorzugt < -20°C als Pfropfgrundlage.

Die Pfropfgrundlage (Kautschukgrundlage) hat im Allgemeinen eine mittlere Teilchengröße (d₅₀-Wert) von 0,05 bis 10 µm, vorzugsweise 0,1 bis 5 µm, besonders bevorzugt 0,2 bis 2 µm.

Die mittlere Teilchengröße d₅₀ ist der Durchmesser, oberhalb und unterhalb dessen jeweils 50 Gew.% der Teilchen liegen. Er kann mittels Ultrazentrifugenmessung (W. Scholtan, H. Lange, Kolloid, Z. und Z. Polymere 250 (1972), 782-1796) bestimmt werden.

Bevorzugte Monomere der Gruppe 1 sind ausgewählt aus mindestens einem der Monomere Styrol, α-Methylstyrol und Methylmethacrylat, bevorzugte Monomere der Gruppe 2 sind ausgewählt aus mindestens einem der Monomere Acrylnitril, Maleinsäureanhydrid und Methylmethacrylat.

Besonders bevorzugte Monomere sind Styrol aus Gruppe 1 und Acrylnitril aus Gruppe 2.

Für die Pfropfpolymerisate B1 geeignete Pfropfgrundlagen sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke sowie Kompositkautschuke, bestehend aus zwei oder mehr der zuvor genannten Systeme, z.B. Silikon-Acrylatkautschuke.

Dienkautschuke im Sinne der vorliegenden Erfindung sind solche z.B. auf Basis Butadien, Isopren etc. oder Gemische von Dienkautschuken oder Copolymerisate von Dienkautschuken oder deren Gemischen mit weiteren copolymerisierbaren Monomeren (z.B. gemäß oben aufgeführter Gruppen 1 und 2), wie beispielsweise Butadien/Styrol-Copolymerisate, mit der Maßgabe, dass die Glasübergangstemperatur der Pfropfgrundlage <10°C, vorzugsweise <0°C, besonders bevorzugt <-10°C liegt.

Besonders bevorzugt ist reiner Polybutadienkautschuk.

Besonders bevorzugte Pfropfpolymerisate B1 sind z.B. ABS-Polymerisate (Emulsions-, Masse- und Suspensions-ABS), wie sie z. B. in der DE-A 2 035 390 (=US-PS 3 644 574) oder in der DE-A 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage beträgt mindestens 30 Gew.-%, vorzugsweise mindestens 40 Gew.-%.

Der Gelgehalt der Pfropfgrundlage wird bei 25°C in Toluol bestimmt (M. Hoffmann, H. Krömer, R. Kuhn, Polymeranalytik I und II, Georg Thieme-Verlag, Stuttgart 1977).

Die Pfropfcopolymerisate B1 werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisat auch solche Produkte verstanden, die durch (Co)Polymerisation der Pfropfmonomere in Gegenwart der Pfropfgrundlage gewonnen werden und bei der Aufarbeitung mit anfallen.

Als Pfropfgrundlage geeignete Acrylatkautschuke sind vorzugsweise Polymerisate aus Acrylsäurealkylestein, gegebenenfalls auch Copolymerisate mit bis zu 40 Gew.-%, bezogen auf die Pfropfgrundlage anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage.

Bei cyclischen vernetzenden Monomeren mit mindestens drei ethylenisch ungesättigten Gruppen ist es vorteilhaft, die Menge auf unter 1 Gew.-% der Pfropfgrundlage zu beschränken.

Bevorzugte "andere" polymerisierbare, ethylenisch ungesättigte Monomere, die neben den Acrylsäureestern gegebenenfalls zur Herstellung der Pfropfgrundlage dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage sind Emulsionspolymerisate, die einen Gelgehalt von mindestens 60 Gew.-% aufweisen.

Weitere geeignete Pfropfgrundlagen sind Silikonkautschuke mit pfropfaktiven Stellen, wie sie in den DE-A 3 704 657, DE-A 3 704 655, DE-A 3 631 540 und DE-A 3 631 539 beschrieben werden.

Komponente B kann weiterhin ein oder mehrere thermoplastische Vinyl(Co)Polymerisate B2 enthalten, in der die o.g. Pfropfpolymerisate B1 in der erfindungsgemäßen Zusammensetzung bevorzugt dispergiert vorliegen.

Geeignet sind als Vinyl(Co)Polymerisate B2 Polymerisate von mindestens einem Monomeren aus der Gruppe der Vinylaromaten, Vinylcyanide (ungesättigte Nitrile), (Meth)Acrylsäure-(C₁ bis C₈)-Alkylester, ungesättigte Carbonsäuren sowie Derivate (wie Anhydride und Imide) ungesättigter Carbonsäuren. Insbesondere geeignet sind (Co)Polymerisate aus
50 bis 99, vorzugsweise 60 bis 80 Gew.-% Vinylaromaten und/oder kernsubstituierten Vinylaromaten wie beispielsweise Styrol, α-Methylstyrol, p-Methylstyrol, p-Chlorstyrol) und/oder Methacrylsäure-(C₁ bis C₈)-Alkylester wie Methylmethacrylat, Ethylmethacrylat), und
1 bis 50, vorzugsweise 20 bis 40 Gew.-% Vinylcyanide (ungesättigte Nitrile) wie Acrylnitril und Methacrylnitril und/oder (Meth)Acrylsäure-(C₁-C₈)-Alkylester (wie Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate B2 sind harzartig und thermoplastisch.

Besonders bevorzugt ist das Copolymerisat aus Styrol und Acrylnitril.

Die (Co)Polymerisate gemäß B2 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte M_{w} (Gewichtsmittel, ermittelt durch Lichtstreuung oder Sedimentation) zwischen 15.000 und 200.000, insbesondere zwischen 50.000 und 180.000.

### Komponente C

Als Komponente C kommen Vinyl(Co)Polymerisate, d.h. Polymerisate oder Copolymerisate von mindestens einem Monomeren aus' der Gruppe der Vinylaromaten, Vinylcyanide (ungesättigte Nitrile), (Meth)Acrylsäure-(C₁ bis C₈)-Alkylester, ungesättigte Carbonsäuren sowie Derivate (wie Anhydride und Imide) ungesättigter Carbonsäuren in Frage. Insbesondere geeignet sind (Co)Polymerisate enthaltend mindestens ein Monomeres ausgewählt aus der Gruppe Styrol, α-Methylstyrol, Acrylsäure, Methacrylsäure, Methacrylsäure(C₁ bis C₄)Alkylester, Acrylnitril und Maleinsäureanhydrid.

Im Gegensatz zur Komponente B2 zeichnet sich Komponente C durch ein wesentlich geringeres mittleres Molekulargewicht aus. Das gewichtsgemittelte Molekulargewicht der Komponente C liegt zwischen 1500 und 5000 g/Mol, bevorzugt zwischen 2000 und 4500 g/Mol. Die chemische Zusammensetzung der Komponente C ist so zu wählen, dass die Glasübergangstemperatur (T_{g}) der Komponente C > 40°C, bevorzugt > 50°C liegt und das Komponente C bei den üblichen Verarbeitungstemperaturen der PC+ABS-Zusammensetzungen (260 bis 280°C) keine nennenswerten Zersetzungserscheinungen zeigt. In der Regel sollte die Glasübergangstemperatur 70°C nicht überschreiten. Der Masseverlust in der dynamischen thermogravimetrischen Analyse (TGA) bei einer Aufheizrate von 10 K/min im Stickstoffstrom sollte gemessen bei 280°C maximal bei 10 Gew.-%, bevorzugt bei maximal 5 Gew.-% bezogen auf die Komponente C liegen.

Diese niedrigen Masseverluste werden erreicht, wenn der Anteil α-Methylstyrol im Copolymer 1,5 bis 17 Gew.-% beträgt und/oder der Anteil Acrylat im Copolymer C) größer 0 und kleiner 20 Gew.-%, insbesondere größer 0 und kleiner 17 Gew.-% beträgt. Eine besonders bevorzugte Untergrenze für den Anteil Acrylat im Copolymer ist 3 Gew.-%, insbesondere 5 Gew.-%, wobei die Mengenangaben auf das Copolymer C) bezogen sind.

Bevorzugte Acrylate sind Butylacrylat oder Glycidylmethacrylat.

Die Vinyl(Co)Polymerisate gemäß Komponente C sind bekannt und werden kommerziell beispielsweise unter dem Handelsnamen Joncryl^{®} von der Fa. Johnson Polymers Inc. (Sturtevant, WI, USA) u.a. auch als Fließfähigkeitsvermittler angeboten und vertrieben.

Die Vinyl(Co)Polymerisate gemäß Komponente C lassen sich nach literaturbekannten Verfahren herstellen, beispielsweise nach dem Verfahren, welches in den US-Patenten US 4,414,370, US 4,529,787, US 4,546,160 und US 5,508,366 beschrieben wird.

### Komponente D

Phosphorhaltige Flammschutzmittel im erfindungsgemäßen Sinne sind bevorzugt ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (IV) 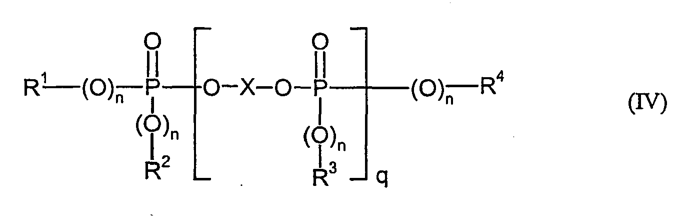 worin
- R¹, R², R³ und R⁴,: unabhängig voneinander jeweils gegebenenfalls halogeniertes C₁- bis C₈-Alkyl, jeweils gegebenenfalls durch Alkyl, vorzugsweise C₁-C₄-Alkyl, und/oder Halogen, vorzugsweise Chlor, Brom, substituiertes C₅- bis C₆-Cycloalkyl, C₆-bis C₂₀-Aryl oder C₇-bis C₁₂-Aralkyl,
- n: unabhängig voneinander, 0 oder 1
- q: 0 bis 30 und
- X: einen ein- oder mehrkernige aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R¹, R², R³ und R⁴ unabhängig voneinander für C₁-C₄-Alkyl, Phenyl, Naphthyl oder Phenyl-C₁-C₄-alkyl. Die aromatischen Gruppen R¹, R², R³ und R⁴ können ihrerseits mit Halogen- und/oder Alkylgruppen, vorzugsweise. Chlor, Brom und/oder C₁-C₄-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
- X: in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.
- n: in der Formel (IV) kann, unabhängig voneinander, 0 oder 1 sein, vorzugsweise ist n gleich 1.
- q: steht für Werte von 0 bis 30. Bei Einsatz von Mischungen verschiedener Komponenten der Formel (IV) können Mischungen vorzugsweise zahlen-gemittelte q-Werte von 0,3 bis 20, besonders bevorzugt 0,5 bis 10, insbesondere 0,5 bis 6 verwendet werden.
- X: steht besonders bevorzugt für 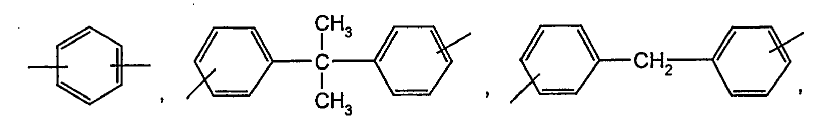 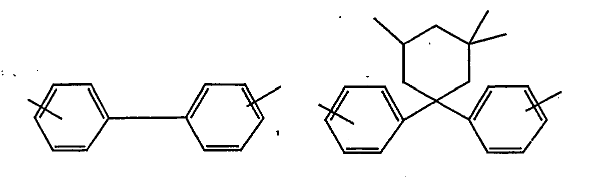 oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Der Einsatz von oligomeren Phosphorsäureestern der Formel (IV), die sich vom Bisphenol A ableiten, ist besonders vorteilhaft, da die mit dieser Phosphorverbindung ausgerüsteten Zusammensetzungen eine besonders hohe Spannungsriss- und Hydrolysebeständigkeit sowie eine besonders geringe Neigung zur Belagsbildung bei der Spritzgussverarbeitung aufweisen. Des weiteren lässt sich mit diesen Flammschutzmitteln eine besonders hohe Wärmeformbeständigkeit erzielen.

Als erfindungsgemäße Komponente C können Monophosphate (q=0), Oligophosphate (q=1-30) oder Mischungen aus Mono- und Oligophosphaten eingesetzt werden.

Monophosphorverbindungen der Formel (IV) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphensäurediphenylester, Phenylphosphonsäurediethylester, Triphenylphosphinoxid oder Trikresylphosphinoxid.

Die Phosphorverbindungen gemäß Komponente C. Formel (IV) sind bekannt (vgl. z.B. EP-A 363 608, EP-A 640 655) oder lassen sich nach bekannten Methoden in analoger Weise herstellen (z.B. Ullmanns Encyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

Phosphonatamine sind vorzugsweise Verbindungen der Formel (V)

A_{3-y}-NB¹_{y} (V)

in welcher
A für einen Rest der Formel (Va) 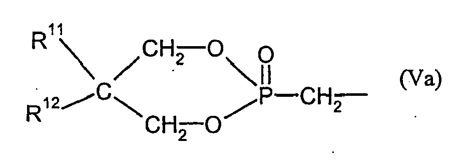 oder (Vb) 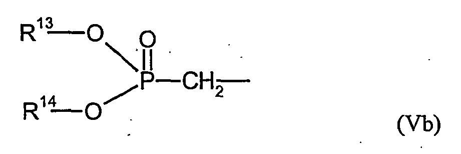 steht,
- R¹¹ und R¹²: unabhängig voneinander für unsubstituiertes oder substituiertes C₁-C₁₀-Alkyl oder für unsubstituiertes oder substituiertes C₆-C₁₀-Aryl, stehen,
- R¹³ und R¹⁴: unabhängig voneinander für unsubstituiertes oder substituiertes C₁-C₁₀-Alkyl oder unsubstituiertes oder substituiertes C₆-C₁₀-Aryl stehen oder
- R¹³ und R¹⁴: zusammen für unsubstituiertes oder substituiertes C₃-C₁₀-Alkylen stehen,
- y: die Zahlenwerte 0, 1 oder 2 bedeuten und
- B¹: unabhängig für Wasserstoff, gegebenenfalls halogeniertes C₂-C₈-Alkyl; unsubstituiertes oder substituiertes C₆-C₁₀-Aryl steht.
- B¹: steht vorzugsweise unabhängig für Wasserstoff, für Ethyl, n- oder iso-Propyl, welche durch Halogen substituiert sein können, unsubstituiertes oder durch C₁-C₄-Alkyl und/oder Halogen substituiertes C₆-C₁₀-Aryl, insbesondere Phenyl oder Naphthyl.

Alkyl in R¹¹, R¹², R¹³ und R¹⁴ steht unabhängig vorzugsweise für Methyl, Ethyl, n-Propyl, iso-Propyl, n-, iso-, sec. oder tert. Butyl, Pentyl oder Hexyl.

Substituiertes Alkyl in R¹¹, R¹², R¹³ und R¹⁴ steht unabhängig vorzugsweise für durch Halogen substituiertes C₁-C₁₀-Alkyl, insbesondere für ein- oder zweifach substituiertes Methyl, Ethyl, n-Propyl, iso-Propyl, n-, iso-, sec. oder tert.-Butyl, Pentyl oder Hexyl.

C₆-C₁₀-Aryl steht in R¹¹, R¹², R¹³ und R¹⁴ unabhängig vorzugsweise für Phenyl, Naphthyl oder Binaphthyl, insbesondere o-Phenyl, o-Naphthyl, o-Binaphthyl, welche durch Halogen (im allgemeinen ein-, zwei- oder dreifach) substituiert sein können.

R¹³ und R¹⁴ können zusammen mit den Sauerstoffatomen, an die sie direkt gebunden sind, und dem Phosphoratom eine Ringstruktur bilden.

Beispielhaft und vorzugsweise werden genannt: 5,5,5',5',5",5"-Hexamethyltris(1,3,2-dioxaphosphorinan-methan)amino-2,2',2"-trioxid der Formel (Va-1)

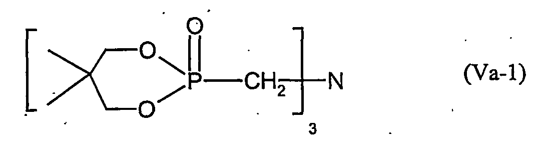

### (Versuchsprodukt XPM 1000 Fa. Solutia Inc., St. Louis, USA)

1,3,2-Dioxaphosphorinan-2-methanamin, N-butyl-N[(5,5-dimethyl-1,3,2-diöxaphosphorinan-2-yl)-methyl]-5,5-dimethyl-, P,2-dioxide; 1,3,2-Dioxaphosphorinane-2-methanamin, N-[[5"5-dimethyl-1,3,2-dioxaphosphorinan-2-yl)methyl]-5,5-dimethyl-N-phenyl-, P,2-dioxid; 1,3,2-Dioxaphosphorinan-2-methanamin, N,N-dibutyl-5,5-dimethyl-, 2-oxid, 1,3,2-Dioxaphosphorinan-2-methanimin, N-[(5,5-dimethyl-1,3,2-dioxaphosphonnan-2-yl)methyl]-N-ethyl-5,5-dimethyl-, P,2-dioxid, 1,3,2-Dioxaphosphorinan-2-methanamin, N-bulyl-N-[(5,5-dichloromethyl-1,3,2,dioxaphosphorinan-2-yl)-methyl]-5,5-di-chloromethyl-, P,2-dioxid, 1,3,2-Dioxaphosphorinan-2-methanamin, N-[(5,5-dichloromethyl-1,3,2-dioxoaphosphorinan-2-yl)methyl]-5,5-di-chloromethyl-N-phenyl-, P,2-dioxid; 1,3,2-Dioxaphosphorinan-2-methanamin, N,N-di-(4-chlorobutyl)-5,5-dimethyl-2-oxide; 1,3,2-Dioxaphosphorinan-2-methanimin, N-[(5,5-dimethyl-1,3,2-dioxaphosphorinan-2-yl)methan]-N-(2-chloroethyl)-5,5-di(chloromethyl)-, P2-dioxid.

Bevorzugt sind weiterhin:

### Verbindungen der Formel (Va-2) oder (Va-3)

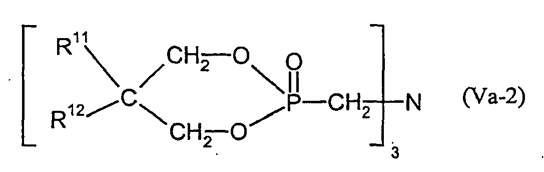

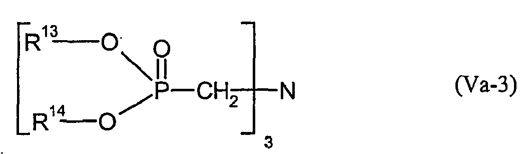

wobei
R¹¹, R¹², R¹³ und R¹⁴ die oben angegebenen Bedeutungen haben.

Besonders bevorzugt sind Verbindungen der Formel (Va-2) und (Va-1).

Die Herstellung der Phosphonatamine ist beispielsweise in US-Patentschrift 5,844,028 beschrieben.

Phosphazene sind Verbindungen der Formeln (VIa) und (VIb) 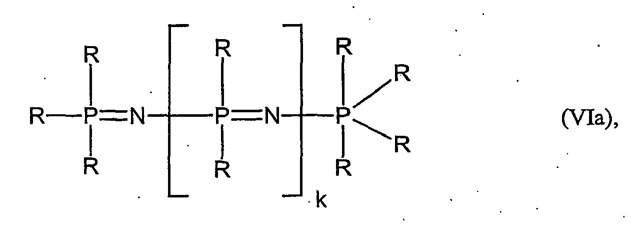 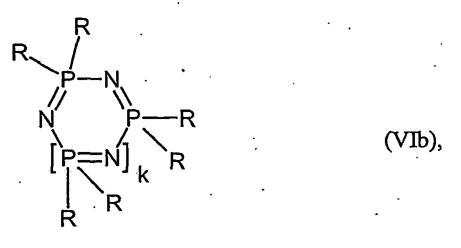 worin
- R: jeweils gleich oder verschieden ist und für Amino, jeweils gegebenenfalls halogeniertes, vorzugsweise mit Fluor halogeniertes C₁- bis C₈-Alkyl, öder C₁- bis C₈- Alkoxy, jeweils gegebenenfalls durch Alkyl, vorzugsweise C₁-C₄-Alkyl, und/oder Halogen, vorzugsweise Chlor und/oder Brom, substituiertes C₅- bis C₆-Cycloalkyl, C₆- bis C₂₀-Aryl, vorzugsweise Phenyl oder Naphthyl, C₆- bis C₂₀-Aryloxy, vorzugsweise Phenoxy, Naphthyloxy, oder C₇- bis C₁₂-Aralkyl, vorzugsweise Phenyl-C₁-C₄-alkyl, steht,
- k: für 0 oder eine Zahl von 1 bis 15, vorzugsweise für eine Zahl von 1 bis 10 steht.

Beispielhaft seien genannt:

Propoxyphosphazen, Phenoxyphosphazen, Methylphenoxyphosphazen, Aminophosphazen und Fluoralkylphosphazene

Bevorzugt ist Phenoxyphosphazen.

Die Phosphazene können allein oder als Mischung eingesetzt werden. Der Rest R kann immer gleich sein oder 2 oder mehr Reste in den Formeln (VIa) und (VIb) können verschieden sein.

Phosphazene und deren Herstellung sind beispielsweise in EP-A 728 811, DE-A 1 961668 und WO 97/40092 beschrieben.

Die Flammschutzmittel können allein oder in beliebiger Mischung untereinander oder in Mischung mit anderen Flammschutzmitteln eingesetzt werden.

### Komponente E

Die Flammschutzmittel entsprechend Komponente D werden oft in Kombination mit sogenannten Antidrippingmitteln verwendet, welche die Neigung des Materials zum brennenden Abtropfen im Brandfall verringern. Beispielhaft seien hier Verbindungen der Substanzklassen der fluorierten Polyolefine, der Silikone sowie Aramidfasern genannt. Diese können auch in den erfindungsgemäßen Zusammensetzungen zum Einsatz kommen. Bevorzugt werden fluorierte Polyolefine als Antidrippingmittel eingesetzt.

Fluorierte Polyolefine sind bekannt und beispielsweise in der EP-A 0 640 655 beschrieben. Sie werden zum Beispiel unter der Marke Teflon^{®} 30N von DuPont vertrieben.

Die fluorierten Polyolefine können sowohl in reiner Form als auch in Form einer koagulierten Mischung von Emulsionen der fluorierten Polyolefine mit Emulsionen der Pfropfpolymerisate (Komponente B1) oder mit einer Emulsion eines Copolymerisats, vorzugsweise auf Styrol/- Acrylnitril- oder PMMA-Basis eingesetzt werden, wobei das fluorierte Polyolefin als Emulsion mit einer Emulsion des Pfropfpolymerisats oder des Copolymerisats gemischt und anschließend koaguliert wird.

Weiterhin können die fluorierten Polyolefine als Präcompound mit dem Pfropfpolymerisat (Komponente B1) oder einem Copolymerisat, vorzugsweise auf Styrol/Acrylnitril- oder PMMA-Basis, eingesetzt werden. Die fluorierten Polyolefine werden als Pulver mit einem Pulver oder Granulat des Pfropfpolymerisats oder Copolymerisats vermischt und in der Schmelze im allgemeinen bei Temperaturen von 200 bis 330°C in üblichen Aggregaten wie Innenkneter, Extrudern oder Doppelwellenschnecken compoundiert.

Die fluorierten Polyolefine können auch in Form eines Masterbatches eingesetzt werden, der durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril, Methylmethycrylat und deren Gemische. Das Polymerisat wird nach saurer Fällung und nachfolgender Trocknung als rieselfähiges Pulver eingesetzt.

Die Koagulate, Präcompounds oder Masterbatches besitzen üblicherweise Feststoffgehalte an fluoriertem Polyolefin von 5 bis 95 Gew.-%, vorzugsweise 7 bis 80 Gew.-%.

Die fluorierten Polyolefine kommen in Konzentrationen von 0 bis 1 Gew.-Teilen, bevorzugt von 0,1 bis 0,5 Gew.-Teilen, insbesondere 0,2 bis 0,5 Gew.-Teilen zum Einsatz, wobei sich diese Mengenangaben bei Einsatz eines Koagulats, Präcompounds oder Masterbatches auf das reine fluorierte Polyolefm beziehen.

### Komponente F (Weitere Zusätze)

Die erfindungsgemäßen Zusammensetzungen können weiterhin wenigstens ein übliches Polyineradditiv wie ein Gleit- oder Entformungsmittel, beispielsweise Pentaerythrittetrastearat, ein Nukleiermittel, ein Antistatikum, einen Stabilisator, einen Füll- oder Verstärkungsstoff, z.B. ein Silikat wie Talk oder Wollastonit, ein weiteres Flammschutzmittel oder einen Flammschutzsynergisten wie beispielsweise ein nanoskaliges anorganisches Material sowie einen Farbstoff oder ein Pigment enthalten.

Des weiteren können die erfindungsgemäßen Zusammensetzungen weitere Polymerkomponenten wie beispielsweise Polyphenylenoxide, Polyester, Epoxyharze oder Novolake enthalten.

Alle Gewichtsteil-Angaben in dieser Anmeldung sind so normiert, dass die Summe der Gewichtsteile aller Komponenten in der Zusammensetzung 100 ergibt.

Die erfindungsgemäßen Zusammensetzungen werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen Zusammensetzungen können zur Herstellung von Formteilen jeder Art verwendet werden. Diese können beispielsweise durch Spritzguß, Extrusion und Blasformverfahren hergestellt werden. Eine weitere Form der Verarbeitung ist die Herstellung von Formkörpern durch Tiefziehen aus zuvor hergestellten Platten oder Folien.

Gegenstand der Erfindung ist daher weiterhin ein Verfahren zur Herstellung der Zusammensetzungen, deren Verwendung zur Herstellung von Formteilen sowie die Formteile selbst.

Beispiele für solche Formteile sind Folien, Profile, Gehäuseteile jeder Art, z.B. für Haushaltsgeräte wie Saftpressen, Kaffeemaschinen, Mixer; für Büromaschinen wie Monitore, Drucker, Kopierer; weiterhin Platten, Rohre, Elektroinstallationskanäle, Profile für den Bausektor, Innenausbau und Außenanwendungen; Teile aus dem Gebiet der Elektrotechnik wie Schalter und Stecker sowie Automobilinnen- und -außenteile.

Insbesondere können die erfindungsgemäßen Zusammensetzungen beispielsweise zur Herstellung von folgenden Formteilen verwendet werden:
Innenausbauteile für Schienenfahrzeuge, Schiffe, Flugzeuge, Busse und Automobile, Radkappen, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür, Spielfahrzeuge für Kinder, Flächige Wandelemente, Gehäuse für Sicherheitseinrichtungen, Heckspoiler, Karosserieteile für KFZ, wärmeisolierte Transportbehältnisse, Vorrichtung zur Haltung oder Versorgung von Kleintieren, Formteile für Sanitär- und Badausrüstungen, Abdeckgitter für Lüfteröffnungen, Formteile für Garten- und Gerätehäuser, Gehäuse für Gartengeräte, Sicherheitsteile im Automobilinnenraum.

Die folgenden Beispiele dienen der weiteren Erläuterung der Erfindung.

### Beispiele

Die in der Tabelle 1 angegebenen und nachfolgend kurz erläuterten Komponenten wurden auf einer ZSK-25 bei 260°C schmelzcompoundiert. Die Prüfkörper wurden auf einer Spritzgießmaschine Typ Arburg 270 E bei 260°C hergestellt.

### Komponente A

Lineares Polycarbonat auf Basis Bisphenol A mit einer relativen Lösungsviskosität von 1,28, gemessen in CH₂Cl₂ als Lösungsmittel bei 25°C und in einer Konzentration von 0,5 g/100 ml.

### Komponente B

- B1:: Pfropipolymerisat von 40 Gew.-Teilen Styrol und Acrylnitril im Gewichtsverhältnis von 73:27 auf 60 Gew.-Teile teilchenförmigen vernetzten Polybutadienkautschuks (mittlerer Teilchendurchmesser d₅₀ = 0,3 µm), hergestellt durch Emulsionspolymerisation.
- B2:: Styrol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C).

### Komponente C

Joncryl^{®} ADF-1350: Styrol-Acrylat-Copolymerisat der Fa. Johnson Polymers Inc. (Sturtevant, WI, USA) mit einem gewichtsgemitteltem Molekulargewicht M_{w} von 4000 g/Mol und mit einer Glasübergangstemperatur T_{g} von 54°C. Der Masseverlust in der dynamischen thermogravimetrischen Analyse (TGA) bei einer Aufheizrate von 10 K/min im Stickstoffstrom gemessen bei 280°C liegt bei 3 Gew.-%,

### Komponenten D

### Bisphenol-A basierendes Oligophosphat

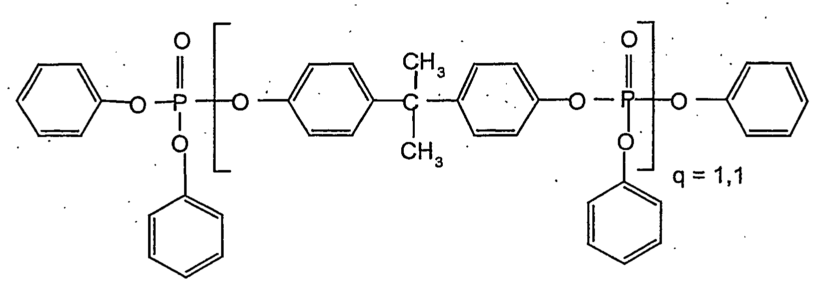

### Komponente E

Tetrafluorethylenpolymerisat als koagulierte Mischung aus einer Pfropfpolymerisat-Emulsion gemäß oben genannter Komponente B1 in Wasser und einer Tetrafluorethylenpolymerisat-Emulsion in Wasser. Das Gewichtsverhältnis Pfropfpolymerisat B1 zum Tetrafluorethylenpolymerisat in der Mischung ist 90 Gew.-% zu 10 Gew.-%. Die Tetrafluorethylenpolymerisat-Emulsion besitzt einen Feststoffgehalt von 60 Gew.-%; der mittlere Teilchendurchmesser liegt zwischen 0,05 und 0,5 µm. Die Pfropfpolymerisat-Emulsion besitzt einen Feststoffgehalt von 34 Gew.-%.

Die Emulsion des Tetrafluorethylenpolymerisats (Teflon® 30 N von DuPont) wird mit der Emulsion des Pfropfpolymerisats B1 vermischt und mit 1,8 Gew.-%, bezogen auf Polymerfeststoff, phenolischer Antioxidantien stabilisiert. Bei 85 bis 95°C wird die Mischung mit einer wässrigen Lösung von MgSO₄ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet.

### Komponente F1

### Pentaerithrithtetrastearat (PETS) als Entformungsmittel

### Komponente F2

### Phosphitstabilisator

### Untersuchung der Eigenschaften der erfindungsgemäßen Formmassen

Die Bestimmung der Kerbschlagzähigkeit erfolgt bei Raumtemperatur gemäß ISO 180/1A an Stäben mit der Abmessung 80 mm x 10 mm x 4 mm.

Die Bestimmung der Wärmeformbeständigkeit nach Vicat B120 erfolgt gemäß ISO 306 an Stäben mit der Abmessung 80 mm x 10 mm x 4 mm.

Das Spannungsrissverhalten (ESC-Verhalten) unter Chemikalieneinwirkung wird an Stäben der Abmessung 80 mm x 10 mm x 4 mm untersucht gemäß DIN 53 449. Als Testmedium wird eine Mischung 60 Vol.-% Toluol und 40 Vol.-% Isopropanol verwendet. Die Probekörper werden mittels einer Kreisbogenschablone vorgedehnt und die Zeit bis zum Bruchversagen in diesem Medium als Funktion der Vordehnung bestimmt. Beurteilt wird bei den flammwidrig eingestellten Zusammensetzungen die minimale Vordehnung, bei der innerhalb von 5 min ein Bruchversagen eintritt. Bei den Zusammensetzungen ohne Flammschutzmittel wurde die Zeit bis zum Bruchversagen bei einer konstanten Randfaserdehnung von 0,8 % als Beurteilungskriterium herangezogen.

Die Bestimmung der Schmelzviskosität erfolgt nach DIN 54 811 bei 260°C und einer Scherrate von 1000 s⁻¹.

Das Brandverhalten der flammwidrigen Proben wurde nach UL-Subj. 94 V an Stäben der Abmessung 127 mm x 12,7 mm x 1,5 mm gemessen.

Eine Zusammenstellung der Eigenschaften der erfindungsgemäßen Zusammensetzung bzw. daraus erhaltener Prüfkörper ist in der Tabelle 1 wiedergegeben.

**Tabelle 1 Formmassen und ihre Eigenschaften**

| | | V1 | 2 | V2 | 2 |
|---|---|---|---|---|---|
| **Komponenten [Gew.-Teile]** | | | | | |
| A | (PC) | 92,7 | 90,0 | 69,4 | 67,4 |
| B1 | (ABS-Pfropfpolymer) | 4,05** | 3,96** | 12,9 | 12,5 |
| B2 | (SAN) | - | - | 16,9 | 16,4 |
| C | (Joncryl) | - | 2,9 | - | 2,9 |
| D | (BDP) | 2,3 | 2,2 | - | - |
| E* | (PTFE) | 0,45** | 0,44** | - | - |
| F1 | (PETS) | 0,4 | 0,4 | 0,7 | 0,7 |
| F2 | (Stabilisator) | 0,1 | 0,1 | 0,1 | 0,1 |

| **Eigenschaften** | | | | | |
|---|---|---|---|---|---|
| ESC (Bruch) | | 0,8%/ | 1,2 %/ | - | - |
| | | 5 min | 5 min | | |
| ESC (Bruch) | | - | - | 0,8% | 0,8% |
| | | | | 4 min | 210 min |
| UL94 V (1.5mm) | | V-0 | V-0 | - | - |
| η (260°C/1000s⁻¹) [Pas] | | 530 | 494 | 286 | 242 |
| aₖ [kJ/m²] | | 60 | 56 | 63 | 85 |
| Vicat B120 [°C] | | 136 | 135 | 132 | 129 |

| | | | | | |
|---|---|---|---|---|---|
| ^{*} wird eingesetzt als PTFE-Masterbatch gemäß Komponente E ^{**} aus PTFE-Masterbatch | | | | | |

Aus Tabelle 1 ist ersichtlich, dass durch Zusatz des niedermolekularen Vinylcopolymerisats sowohl die Schmelzefließfähigkeit als auch die Chemikalienresistenz (das ESC-Verhalten) verbessert wird. Flammwidrigkeitsverhalten, Kerbschlagzähigkeit und Wärmeformbeständigkeit bleiben im Rahmen der Messgenauigkeit unbeeinflusst.

## Patentansprüche

1. Zusammensetzung enthaltend
A) aromatisches Polycarbonat oder Polyestercarbonat oder Mischungen hieraus,
B) kautschukmodifizierte Vinyl(co)polymerisate,
C) Vinyl(co)polymerisate enthaltend einen Anteil α-Methylstyrol von 1,5 bis 17 Gew.-% und/oder einen Anteil Acrylat größer 0 und kleiner 20 Gew.-%, bezogen auf das Copolymer C), mit einem gewichtsgemittelten Molekulargewicht M_{w} von 1500 bis 5000 g/Mol und mit einer Glasübergangstemperatur von > 40°C und gegebenenfalls
D) Phosphorbasierende Flammschutzmittel und
E) Antitropfinittel.

2. Zusammensetzung gemäß Anspruch 1 enthaltend
20 bis 98 Gew.-Teile Komponente A)
1 bis 80 Gew.-Teile Komponente B)
0,1 bis 20 Gew.-Teile Komponente C) und gegebenenfalls
1 bis 30 Gew.-Teile Komponente D)
0 bis 1 Gew.-Teil Komponente E).

3. Zusammensetzung gemäß Anspruch 1 enthaltend
40 bis 90 Gew.-Teile Komponente A)
0 bis 50 Gew.-Teile Komponente B)
0,5 bis 10 Gew.-Teile Komponente C) und gegebenenfalls
2 bis 20 Gew.-Teile Komponente D)
0,1 bis 0,5 Gew.-Teil Komponente E).

4. Zusammensetzungen gemäß Anspruch 1, wobei Komponente C) ein gewichtsgemitteltes Molekulargewicht M_{w} von 2000 bis 4500 g/mol und eine Glasübergangstemperaur > 50°C aufweisen.

5. Zusammensetzung gemäß Anspruch 1, enthaltend als Komponente B) ein oder mehrere Pfropfpolymerisate von
5 bis 95 Gew.-% Monomeren einer Mischung aus
1. 50 bis 99 Gew.-% mindestens einem ausgewählt aus der Gruppe der Vinylaromaten, kernsubstituierien Vinylaromaten und Methacrylsäure-(C₁-C₈)-Alkylester und
2. 1 bis 50 Gew.-% mindestens einem ausgewählt aus der Gruppe der Vinylcyaniden, (Meth)acrylsäure-(C₁-C₈)-Alkylester und Derivate ungesättigter Carbonsäuren auf 95 bis 5 Gew.-% Kautschuk mit Glasübergangstemperaturen < 10°C als Pfropfgrundlage.

6. Zusammensetzung nach Anspruch 5, wobei Monomere der Gruppe 1 ausgewählt sind aus mindestens einem aus der Gruppe Styrol, α-Methylstyrol und Methylmethacrylat und Monomere der Gruppe 2 ausgewählt sind aus mindestens einem aus der Gruppe Acrylnitril, Maleinsäureanhydrid und Methylmethacrylat.

7. Zusammnensetzung nach Anspruch 6, wobei die Monomere Styrol und Acrylnitril sind.

8. Zusammensetzung nach Anspruch 5, wobei die Pfropfgrundlage ausgewählt ist aus mindestens einer der Gruppe der Dienkautschuke, Acrylatkautschuke, EP(D)M-Kautschuke, Polyurethan- und Silikonkautschuke sowie Kompositkautschuke aus mindestens zwei der genannten Kautschuke.

9. Zusammensetzung nach Anspruch 8, wobei die Pfropfgrundlage ausgewählt ist aus mindestens einer aus der Gruppe der Dienkautschuke, Acrylatkautschuke und Silikon-Acrylatkautschuken.

10. Zusammensetzung nach Anspruch 1, enthaltend als Komponente C) Vinyl(co)polymerisat aus mindestens einem Monomer ausgewählt aus der Gruppe der Vinylaromaten, Vinylcyaniden, (Meth)acrylsäure-(C₁-C₈)-Alkylester, ungesättigter Carbonsäuren sowie Derivate ungesättigter Carbonsäuren.

11. Zusammensetzung nach Anspruch 10, wobei das Vinyl(co)polymerisat mindestens ein Monomer ausgewählt aus der Gruppe Styrol, α-Methyl-Styrol, Acrylsäure, Metharylsäure, (Meth)acrylsäure-(C₁-C₄)-Alkylester, Acrylnitril und Maleinsäureanhydrid enthält.

12. Zusammensetzung nach Anspruch 1, wobei Komponente D) ausgewählt ist aus mindestens einer aus der Gruppe der Mono- und oligomeren Phosphor- und Phosphonsäureester, Phosphonatamine, Phosphazene oder deren Mischungen.

13. Zusammensetzung nach Anspruch 12, enthaltend als Komponente D) Mono- und oligomere Phosphor- bzw. Phosphonsäureester der allgemeinen Formel (IV) 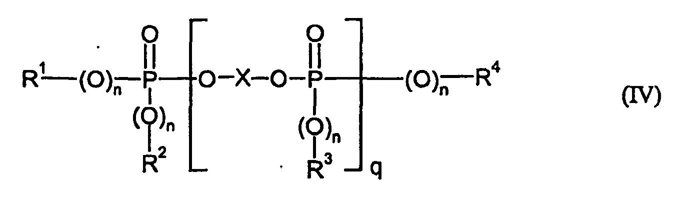 worin
R¹, R², R³ und R⁴, unabhängig voneinander jeweils gegebenenfalls halogeniertes C₁- bis C₈-Alkyl, jeweils gegebenenfalls durch Alkyl und/oder Halogen substituiertes C₅- bis C₆-Cycloalkyl, C₆- bis C₂₀-Aryl oder C₇- bis C₁₂₋Aralkyl,
n unabhängig voneinander, 0 oder 1
q 0 bis 30 und
X einen ein- oder mehrkernigen aromatischen Rest mit 6 bis 30 C-Atomen, oder einen linearen oder verzweigten aliphatische Rest mit 2 bis 30 Atomen, der OH-substituiert sein und bis zu 8 Etherbindungen enthalten kann, bedeuten.

14. Zusammensetzung nach Anspruch 13, wobei X in Formel (IV) für 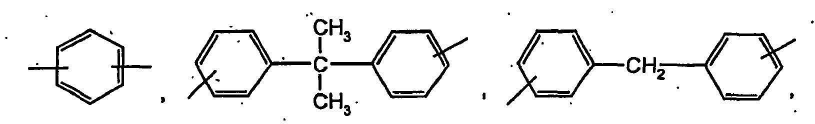 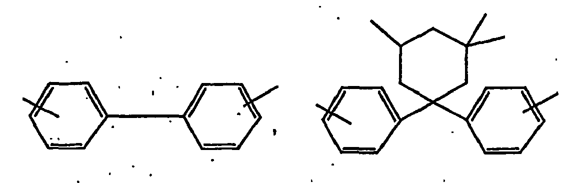 oder deren chlorierte oder bromierte Derivate steht,
R¹ für Phenyl oder durch C₁ - C₄- Alkyl substituiertes Phenyl steht und
q 0,5 bis 6 bedeutet.

15. Zusammensetzung nach Anspruch 1, enthaltend mindestens ein Additiv ausgewählt aus der Gruppe der Gleit- oder Entformungsmittel, Nukleiermittel, Antistatika, Stabilisator, Füll- oder Verstärkungsstoffe, Flammschutzsynergiste Farbstoffe und Pigmente.

16. Zusammensetzung nach einem der vorhergehenden Ansprüche enthaltend als Antitropfmittel fluorierte Polyolefme in Form eines Präcompoundes oder eines Masterbatchs mit einem Pfropfpolymerisat gemäß Komponente B) oder einem Vinyl(Co)polymerisat.

17. Zusammensetzung nach Anspruch 16, wobei fluoriertes Polyolefin in Form eines Präcompounds oder Masterbatch mit einem Copolymerisat auf Styrol/Acrylnitril- oder Polymethylmethacrylat-Basis eingesetzt wird.

18. Verwendung einer Zusammensetzung nach Anspruch 1 zur Herstellung von Formteilen.

19. Formteil, erhältlich aus Zusammensetzung nach Anspruch 1.

## Claims

1. Composition containing
A) aromatic polycarbonate or polyester carbonate or mixtures thereof,
B) rubber-modified vinyl (co)polymers,
C) vinyl (co)polymers containing a proportion of α-methyl styrene of 1.5 to 17 wt.% and/or a proportion of acrylate of greater than 0 and less than 20 wt.%, relative to the copolymer C), with a weight-average molecular weight M_{w} of 1500 to 5000 g/mol and with a glass transition temperature of > 40°C and optionally
D) phosphorus-based flame retardants and
E) antidripping agents.

2. Composition according to claim 1 containing
20 to 98 parts by weight of component A)
1 to 80 parts by weight of component B)
0.1 to 20 parts by weight of component C) and optionally
1 to 30 parts by weight of component D)
0 to 1 part by weight of component E).

3. Composition according to claim 1 containing
40 to 90 parts by weight of component A)
0 to 50 parts by weight of component B)
0.5 to 10 parts by weight of component C) and optionally
2 to 20 parts by weight of component D)
0.1 to 0.5 parts by weight of component E).

4. Compositions according to claim 1, wherein component C) displays a weight-average molecular weight M_{w} of 2000 to 4500 g/mol and a glass transition temperature of > 50°C.

5. Composition according to claim 1, containing as component B) one or more graft polymers of
5 to 95 wt.% monomers of a mixture comprising
1. 50 to 99 wt.% of at least one selected from the group comprising vinyl aromatics, ring-substituted vinyl aromatics and methacrylic acid (C₁-C₈) alkyl esters and
2. 1 to 50 wt.% of at least one selected from the group comprising vinyl cyanides, (meth)acrylic acid (C₁-C₈) alkyl esters and derivatives of unsaturated carboxylic acids on
95 to 5 wt.% rubber having glass transition temperatures of < 10°C as graft base.

6. Composition according to claim 5, wherein group 1 monomers are selected from at least one from the group comprising styrene, α-methyl styrene and methyl methacrylate and group 2 monomers are selected from at least one from the group comprising acrylonitrile, maleic anhydride and methyl methacrylate.

7. Composition according to claim 6, wherein the monomers are styrene and acrylonitrile.

8. Composition according to claim 5, wherein the graft base is selected from at least one of the group comprising diene rubbers, acrylate rubbers, EP(D)M rubbers, polyurethane and silicone rubbers and composite rubbers comprising at least two of the cited rubbers.

9. Composition according to claim 8, wherein the graft base is selected from at least one from the group comprising diene rubbers, acrylate rubbers and silicone-acrylate rubbers.

10. Composition according to claim 1, containing as component C) vinyl (co)polymer consisting of at least one monomer selected from the group comprising vinyl aromatics, vinyl cyanides, (meth)acrylic acid (C₁-C₈) alkyl esters, unsaturated carboxylic acids and derivatives of unsaturated carboxylic acids.

11. Composition according to claim 10, wherein the vinyl (co)polymer contains at least one monomer selected from the group comprising styrene, α-methyl styrene, acrylic acid, methacrylic acid, (meth)acrylic acid (C₁-C₄) alkyl esters, acrylonitrile and maleic anhydride.

12. Composition according to claim 1, wherein component D) is selected from at least one from the group comprising monomeric and oligomeric phosphoric and phosphonic acid esters, phosphonate amines, phosphazenes or mixtures thereof.

13. Composition according to claim 12, containing as component D) monomeric and oligomeric phosphoric or phosphonic acid esters having the general formula (IV) 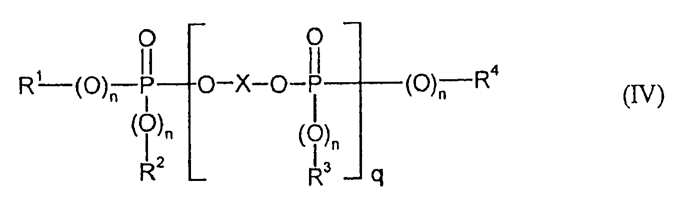 wherein
R¹, R², R³ and R⁴ mutually independently denote optionally halogenated C₁ to C₈ alkyl, optionally alkyl- and/or halogen-substituted C₅ to C₆ cycloalkyl, C₆ to C₂₀ aryl or C₇ to C₁₂ aralkyl,
n mutually independently denotes 0 or 1
q denotes 0 to 30 and
X denotes a mononuclear or polynuclear aromatic radical having 6 to 30 C atoms, or a linear or branched aliphatic radical having 2 to 30 C atoms, which can be OH-substituted and can contain up to 8 ether bonds.

14. Composition according to claim 13, wherein X in formula (IV) stands for 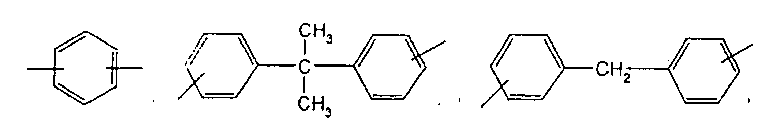 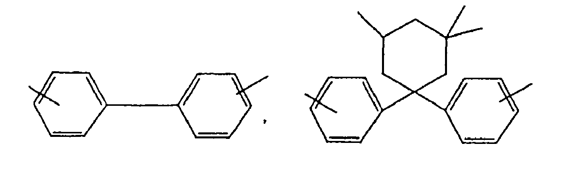 or chlorinated or brominated derivatives thereof
R¹ stands for phenyl or C₁-C₄ alkyl-substituted phenyl and
q denotes 0.5 to 6.

15. Composition according to claim 1, containing at least one additive selected from the group comprising lubricants or release agents, nucleating agents, antistatics, stabilisers, fillers or reinforcing agents, flame retardant synergists, dyes and pigments.

16. Composition according to one of the preceding claims, containing as antidripping agent fluorinated polyolefins in the form of a pre-compound or a masterbatch with a graft polymer in accordance with component B) or a vinyl (co)polymer.

17. Composition according to claim 16, wherein fluorinated polyolefin is used in the form of a pre-compound or masterbatch with a copolymer based on styrene/acrylonitrile or polymethyl methacrylate.

18. Use of a composition according to claim 1 for the production of moulded parts.

19. Moulded part obtainable from the composition according to claim 1.

## Revendications

1. Composition contenant :
A) un polycarbonate ou polyester-carbonate aromatique ou des mélanges de ceux-ci,
B) un (co)polymère vinylique modifié caoutchouc,
C) un (co)polymère vinylique contenant un quantité d'α-méthylstyrène allant de 1,5 à 17% en poids et/ou une quantité d'acrylate supérieure à 0 et inférieure à 20% en poids, sur base du copolymère C), ayant un poids moléculaire moyen en poids Mw allant de 1500 à 5000 g/mole et une température de transition vitreuse de > 40°C et le cas échéant,
D) un agent de protection contre les flammes à base de phosphore, et
E) un agent anti-goutte.

2. Composition selon la revendication 1, contenant :
20 à 98 parties en poids du composant A),
1 à 80 parties en poids du composant B),
0,1 à 20 parties en poids du composant C), et le cas échéant
1 à 30 parties en poids du composant D),
0 à 1 partie en poids du composant E).

3. Composition selon la revendication 1, contenant :
40 à 90 parties en poids du composant A),
0 à 50 parties en poids du composant B),
0,5 à 10 parties en poids du composant C), et le cas échéant
2 à 20 parties en poids du composant D),
0,1 à 0,5 partie en poids du composant E).

4. Composition selon la revendication 1, où les composants C) présentent un poids moléculaire moyen en poids Mw allant de 2000 à 4500 g/mole et une température de transition vitreuse > 50°C.

5. Composition selon la revendication 1, contenant comme composants B), un ou plusieurs polymères greffés constitués de
5 à 95% en poids des monomères appartenant au mélange de
1. 50 à 99% en poids d'au moins un composé choisi parmi le groupe des aromatiques vinyliques, des aromatiques vinyliques substitués sur le cycle et esters alcoyliques (C₁-C₈) d'acide méthacrylique, et
2. 1 à 50% en poids d'au moins un composé choisi parmi le groupe des cyanures vinyliques, des esters alcoyliques (C₁-C₈) d'acide (méth)acrylique et des dérivés d'acide carboxylique insaturé, sur
95 à 5% en poids d'un caoutchouc ayant une température de transition vitreuse < 10°C comme base de greffage.

6. Composition selon la revendication 5, où les monomères du groupe 1 sont au moins l'un du groupe styrène, α-méthylstyrène et méthacrylate de méthyle et les monomères du groupe 2 sont au moins l'un du groupe acrylonitrile, anhydride maléique et méthacrylate de méthyle.

7. Composition selon la revendication 6, où les monomères sont le styrène et l'acrylonitrile.

8. Composition selon la revendication 5, où la base de greffage choisie est au moins l'un du groupe des caoutchoucs diéniques, des caoutchoucs acrylate, des caoutchoucs EP(D)M, des caoutchoucs polyuréthanne et silicone ainsi que des caoutchoucs composites constitués d'au moins deux des caoutchoucs cités.

9. Composition selon la revendication 8, où la base de greffage choisie est au moins l'une du groupe des caoutchoucs diéniques, des caoutchoucs acrylate et des caoutchoucs silicone-acrylate.

10. Composition selon la revendication 1, contenant comme composant C), un (co)polymère vinylique constitué d'au moins un monomère choisi parmi le groupe des aromatiques vinyliques, des cyanures vinyliques, des esters alcoyliques (C₁-C₈) d'acide (méth)acrylique, des acides carboxyliques insaturés ainsi que des dérivés d'acide carboxylique insaturé.

11. Composition selon la revendication 10, où le (co)polymère vinylique contient au moins un monomère choisi parmi le groupe du styrène, α-méthylstyrène, acide acrylique, acide méthacrylique, ester alcoylique (C₁-C₄) d'acide (méth)acrylique, acrylonitrile et anhydride maléique.

12. Composition selon la revendication 1, où le composant D) choisi est au moins un composé du groupe des monoesters et esters oligomères des acides phosphorique et phosphonique, phosphonatamines, phosphazènes ou leurs mélanges.

13. Composition selon la revendication 12, contenant comme composant D), des monomères et esters et oligomères des acides phosphorique et phosphonique de la formule générale (IV) : 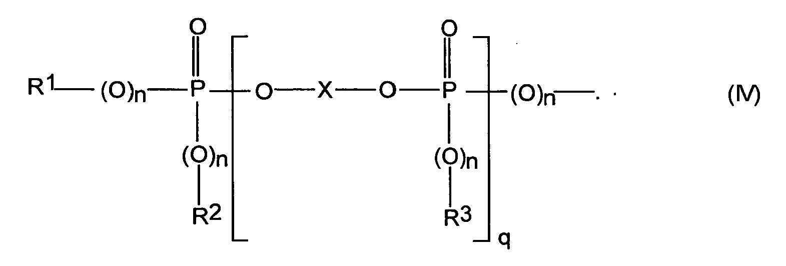 où
R¹, R², R³ et R⁴ représentent indépendamment l'un de l'autre, un radical alcoyle en C₁ à C₈, chaque fois le cas échéant halogéné, un radical cycloalcoyle en C₅ à C₆, un radical aryle en C₆ à C₂₀, ou un radical aralcoyle en C₇ à C₁₂, chaque fois le cas échéant substitué par alcoyle et/ou halogène
n représente indépendamment, 0 ou 1,
q est 0 à 30, et
X représente un reste aromatique mono- ou polycyclique ayant 6 à 30 atomes C, ou un reste aliphatique linéaire ou ramifié ayant 2 à 30 atomes C, qui peut être substitué par OH et contenir jusqu'à 8 liaisons éther.

14. Composition selon la revendication 13, où X dans la formule (IV) représente : 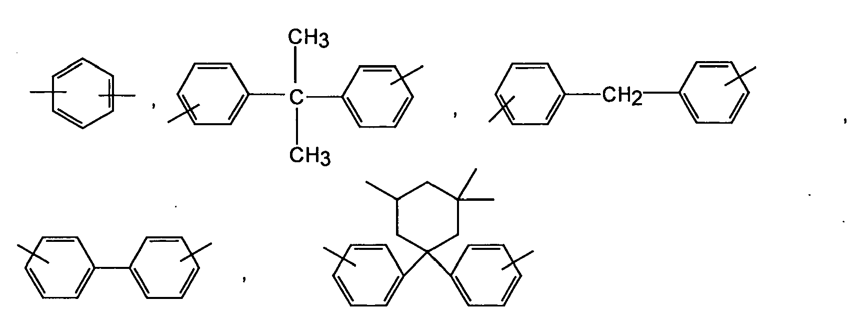 ou leurs dérivés chlorés ou bromés,
R¹ représente le radical phényle ou un radical phényle substitué par alcoyle en C₁-C₄, et
Q représente 0,5 à 6.

15. Composition selon la revendication 1, contenant au moins un additif choisi parmi le groupe des agents de lubrification et de démoulage, des agents de nucléation, des antistatiques, des stabilisants, des agents de charges ou de renforcement, des synergiques de protection contre les flammes, des colorants et des pigments.

16. Composition selon l'une quelconque des revendications précédentes, contenant comme agent anti-goutte, une polyoléfine fluorée sous forme d'un prémélange ou d'un mélange maître avec un polymère greffé selon le composant B) ou un (co)polymère vinylique.

17. Composition selon la revendication 16, où la polyoléfine fluorée est mise en oeuvre sous forme d'un prémélange ou d'un mélange maître avec un copolymère de styrène/acrylonitrile ou à base de poly(méthacrylate de méthyle).

18. Utilisation d'une composition selon la revendication 1, pour la préparation de pièces moulées.

19. Pièce moulée, obtenue à partir de la composition selon la revendication 1.
